# EUROPEAN PATENT SPECIFICATION

(11) **EP 2 909 018 B1**
(45) Date of publication and mention of the grant of the patent: **21.09.2016**
(21) Application number: 13801794.2
(22) Date of filing: 27.09.2013
(51) Int. Cl.: B29D 30/00

(54) **METHOD AND PLANT FOR BUILDING TYRES FOR VEHICLE WHEELS**
VERFAHREN UND ANLAGE ZUR HERSTELLUNG VON FAHRZEUGREIFEN
MÉTHODE ET ÉQUIPEMENT POUR LA FABRICATION DE PNEUMATIQUES POUR VÉHICULES

(30) Priority: 17.10.2012 IT MI20121757; 23.10.2012 US 201261717276 P
(43) Date of publication of application: 26.08.2015
(73) Proprietor: Pirelli Tyre S.p.A., 20126 Milano (IT)
(72) Inventor: MANCINI, Gianni, 20126 Milano (IT); MARCHINI, Maurizio, 20126 Milano (IT)
(74) Representative: Tansini, Elio Fabrizio
(86) International application number: PCT/IB2013/058919
(87) International publication number: WO 2014/060885

(56) References cited:
- WO-A1-2010/064084
- WO-A1-2011/018687
- US-A- 2 818 907

## Description

The present invention has as object a method and a plant for building tyres for vehicle wheels.

A tyre for vehicle wheels generally comprises a carcass structure comprising at least one carcass ply having respectively opposite terminal flaps engaged with respective reinforcement annular structures, generally termed "bead cores", integrated in the areas normally identified with the name of "beads", having an internal diameter substantially corresponding with a so-called "fitting diameter" of the tyre on a respective mounting rim. The tyre further comprises a crown structure comprising at least one belt strip situated in radially outer position with respect to the carcass ply and a tread band that is radially outer with respect to the belt strip. Between the tread band and the belt strip/strips, a so-called "underlayer" can be interposed, made of elastomeric material with properties suitable for ensuring a stable joining of the belt strip/strips to the tread band itself. Respective sidewalls made of elastomeric material are further applied on the lateral surfaces of the carcass structure, each being extended from one of the lateral edges of the tread band up to the respective annular structure for anchoring to the beads. In the tyres of "tubeless" type, the carcass ply is internally coated by a layer of elastomeric material preferably with butyl base, normally termed "liner" having optimal characteristics of impermeability to the air and being extended from one bead to another.

WO 2008/099236, on behalf of the same Applicant, describes equipment for building tyres comprising a forming drum and auxiliary support elements. The auxiliary support elements are moved close to the forming drum in order to facilitate steps for delivery of elementary components in areas axially outside the forming drum. After having formed the carcass ply, the auxiliary support elements are moved away from the forming drum in order to be able to carry out a turning up step in which the ends of the carcass ply are bent in order to form up-turned elements that contain the reinforcement annular structures.

Document WO 2010/064084-A discloses a process for building tyres, comprising the steps of providing a building drum, engaging auxiliary support members with the building drum, applying one tyre component around a circumferential surface of said support members, axially moving said auxiliary support members away from said building drum.

This document furthermore discloses an apparatus for building tyres, comprising: - a building drum having at least one first outer circumferential surface; - at least one pair of auxiliary support members to be removably engaged with the building drum, each in axially approached relationship with a respective end of the building drum, and having second outer circumferential surfaces extending in the continuation of said first outer circumferential surface for supporting at least one tyre component; wherein each of the second outer circumferential surfaces has at least one non-stick circumferential portion and at least one sticking circumferential portion.

Document US 2818907-A discloses a tire building equipment provided with drums and drum extension rings which are automatically engaged and then disengaged from a building drum at the appropriate times in the tire building procedure.

The tire manufacturing method disclosed therein comprises steps of advancing the building drums to a plurality of stations, wherein at each station the respective drum is chucked and rotated, if necessary, and some portion of the tire building procedure is performed.

WO 2011/018687, on behalf of the same Applicant, describes a plant for building tyres for vehicle wheels, comprising a line for building the carcass structure, which in turns comprises:
- at least one forming drum;
- at least one pair of support rings removably associated with the forming drum;
- at least one support ring association station including at least one device for associating the pair of support rings with the forming drum;
- at least one station for removing support rings including at least one device for removing the pair of support rings from the forming drum;
- a first transfer device adapted to transfer the forming drum dissociated from the pair of support rings from the support ring removal station to a work station of the carcass structure building line;
- a second transfer device, adapted to transfer the pair of supports rings dissociated from the forming drum to a temporary storage for support rings.

The Applicant has verified that, in the carcass structure building line of the type described by WO 2011/018687, employing forming drums and auxiliary support elements or rings, the management of the transfers of the forming drums and of the auxiliary support elements together with the management of the association/removal of the auxiliary support elements with/from the respective forming drum can be complex, lengthening the building times, requiring a number of significant resources and increasing the bulk of the same building line.

In particular, the Applicant notes that such drawbacks can be more considerable when employing building processes with the use of semifinished products previously obtained and stored in respective storage areas.

In such case, the Applicant observes that with the ability to obtain more compact building plants, the management of the auxiliary support elements could significantly affect layout, production and flexibility of the plant.

The Applicant has perceived that in building lines (preferably for the carcass structure) which comprise a first building path, contemplating the use of auxiliary support elements coupled to each forming drum, and a second building path, in which the forming drums are dissociated from the auxiliary support elements, the aforementioned building paths following each other and being associated in a manner such that the terminal position of both substantially coincides; in the movement of each forming drum along the aforementioned building paths, it becomes possible to simplify the management of the transfers of the forming drums and the auxiliary support elements, and the management of the association/removal of the auxiliary support elements with/from the respective forming drum. In such a manner, the bulk of the building line is limited, reducing times and employed resources.

More precisely, the Applicant has found that by arranging, between the first and the second building path, an exchange station in which the forming drum decoupled from the auxiliary support elements is removed from a transfer device and replaced with a new drum which has completed the processing cycle along the second building path, it is possible to simplify the building plant itself due to a more efficient management of the movement of the forming drums and of the same auxiliary support elements of each building line.

In accordance with a first aspect thereof, the invention therefore regards a method for building tyres for vehicle wheels as defined in claim 1.

Preferred embodiments of the method are defined in the dependent claims 2 to 8.

The Applicant deems that in this manner it is possible to execute the simultaneous building of two or more tyres, by arranging a single tyre being processed on the respective forming drum provided with auxiliary support elements along the first building path, simultaneously with the processing along the second building path of one or more tyres on respective forming drums lacking auxiliary support elements. Finally, only one pair of auxiliary support elements may be used for actuating the building of tyres having geometric characteristics that are even respectively different, with high productivity. In accordance with a further aspect, the invention regards a plant for building tyres for vehicle wheels, as defined in claim 9, the plant comprising:
forming drums;
a first building path;
a second building path.

Preferred embodiments of the plant are defined in the dependent claims 10 to 15.

In at least one of the aforementioned aspects, the present invention can have at least one of the following preferred characteristics.

Preferably, a single forming drum is moved along the first building path at a time.

The Applicant deems that the presence of a single tyre being processed in the first building path allows a greater operative flexibility along the first path itself.

The Applicant also deems that the type of components applied along the first building path is such to condition a considerable part of the structural and functional characteristics of the obtained tyre. An increase of the production flexibility of the first building path is therefore particularly useful for the purposes of the production flexibility of the entire plant.

Preferably, at least two forming drums are moved along the second building path.

Preferably, a same transfer device transfers the forming drum which has completed the processing on the first building path and the forming drum which has completed the processing on the second building path.

It is thus possible to attain an appreciable structural simplification of the plant by employing a single transfer device for exchanging the position of each drum coming from the first building path with the drum coming from the second building path.

Preferably, the forming drum which has completed the processing on the first building path is decoupled from the auxiliary support elements before being transferred to the second building path.

The transfer of the drum can therefore occur in the absence of the auxiliary support elements, whose presence is not required for the processing to be completed along the second building path.

Preferably, a decoupling of the auxiliary support elements from the respective forming drum is at least partly actuated simultaneously with a translation of the forming drum towards the exchange station.

In such a manner, undesired processing dead times are reduced. The decoupling of the auxiliary support elements in fact starts before the forming drum reaches the exchange station.

Preferably, a decoupling of the auxiliary support elements from the respective forming drum is substantially completed when the latter reaches the exchange station.

In such a manner, the processing dead times are eliminated. The time required for the decoupling of the auxiliary support elements, remaining completely "concealed" in the time required for the transfer of the forming drum towards the exchange station, does not impact the cycle time of the entire plant. Upon reaching the exchange station, the forming drum is already ready to be removed from the conveyor.

Preferably, a coupling of the auxiliary support elements to the respective forming drum is at least partly actuated simultaneously with a translation of the forming drum moving away from the exchange station.

In such a manner, undesired processing dead times are reduced. The moving away of the drum from the exchange station can start immediately after the transfer of the new drum on the same conveyor, without having to wait for the coupling of the auxiliary support elements.

Preferably, a coupling of the auxiliary support elements to the respective forming drum is completed before the forming drum itself reaches the first work station in which the presence of the auxiliary support elements is required.

The processing dead times, induced by the coupling operation, are therefore completely eliminated. Preferably, the forming drum is moved by means of a conveyor along a first building path.

Preferably, the forming drum which has completed the processing on the first building path is removed from the conveyor before being transferred to the second building path.

Preferably, the forming drum which has completed the processing on the second building path is transferred on said conveyor in the exchange station.

Preferably, the auxiliary support elements are decoupled from the forming drum due to the action of axial movement members mounted on the conveyor.

The installation of the axial movement members on the conveyor facilitates the operation of coupling and/or decoupling simultaneously with the translation of the conveyor.

Preferably the auxiliary support elements are decoupled from the forming drum due to the action of axial movement members unconstrained from the conveyor.

In one possible embodiment, the auxiliary support elements are decoupled from the forming drum due to the action of axial movement members installed in proximity of the exchange station.

The installation of the axial movement members separately from the conveyor, for example along an end portion of the first building path extending between the exchange station and the first work station closest thereto, allows a structural simplification of the conveyor that benefits the manoeuvrability of the same along the first building path.

Preferably, both auxiliary support elements decoupled from the forming drum remain engaged to a conveyor by means of which the forming drum is moved along a first building path.

A simplification in the execution of the coupling and/or decoupling operations follows, executable for example by means of a simple axial movement of the auxiliary support elements with respect to the forming drum.

Preferably, the forming drum coupled to said auxiliary support elements is moved between first work stations arranged along the first building path.

Preferably, the forming drum moved along the first building path reaches the first work stations according to a sequence programmable and modifiable at each work cycle.

The possibility of moving the forming drum according to a desired sequence, equal to or different from the spatial succession of the first work stations along the first building path, that can be selected or modified each time according to needs, allows attaining a decisive increase of the operating flexibility of the plant.

Preferably, the forming drum moved along the first building path reaches the first work stations according to a sequence different from the spatial succession of the same first work stations along the first building path.

Preferably, said at least one forming drum decoupled from said auxiliary support elements is moved between second work stations arranged along the second building path.

In a possible modified embodiment, the forming drum transferred to the exchange station is coupled to additional auxiliary support elements.

Thus, the production of tyres having different geometric conformations and/or structural conformations from each other can be actuated, for example having different fitting diameter, maintaining a high productivity with a minimal investment in the plants and equipment.

Preferably, the additional auxiliary support elements replace the auxiliary support elements decoupled from the forming drum which has completed the processing on the first building path.

It is thus possible to dedicate the first building path even for the processing of a single tyre measure at a time. The processing of a new tyre will start after the processing cycle for the preceding tyre along the first building path has been completed. This condition leads to improved production flexibility.

Preferably, both additional auxiliary support elements decoupled from the forming drum remain engaged to a conveyor by means of which the forming drum is moved along a first building path.

There follows a further simplification with regard to structure and in the execution of the coupling and/or decoupling operations, executable for example by means of a simple axial movement of the additional auxiliary support elements with respect to the forming drum.

Preferably, first carcass structure components are deposited on the forming drum moved along the first building path.

Preferably, the first carcass structure components comprise at least one component selected from among the following: liner, under-liner, radially inner portions of antiabrasive inserts, complete antiabrasive inserts, complex-liner (intended as a single semifinished product comprising liner, under-liner and antiabrasive inserts or portions thereof), first carcass ply, chafer, second carcass ply, sidewall inserts.

Preferably, at least one of said first carcass structure components comprises a semifinished product in strip form delivered in a circumferential sense on the forming drum.

The Applicant has observed that is thus possible to reduce the times required for the deposition of each component on the forming drum.

Preferably, axially opposite flaps of said first carcass structure components are superimposed on the auxiliary support elements.

In such a manner, the precise deposition of structural components is allowed, also in strip form with width greater than the axial size of the forming drum.

Preferably, second carcass structure components are deposited on the forming drum along the second building path.

Preferably, the second carcass structure components comprise at least one component selected from among: bead reinforcement structures (including bead cores and possible filler), radially outer portions of antiabrasive inserts, complete antiabrasive inserts, radially inner sidewall portions, complete sidewalls.

Preferably, reinforcement annular structures are applied to the first carcass structure components along the second building path.

In a possible preferred solution, reinforcement annular structures are applied to the first carcass structure components in one of said second work stations, proximal to the exchange station.

Preferably, the transfer device removes the forming drum from the second work station in which the reinforcement annular structures are applied.

A structural simplification of the plant is therefore attained.

Preferably, a crown structure is situated around the forming drum along the second building path.

In a preferred embodiment, a crown structure is applied on the shaped carcass structure following a mutual axial approaching of two axially approachable half-parts of the forming drum.

Preferably, a built tyre is removed from the forming drum following the application of the crown structure to the carcass structure.

Preferably, a crown structure is formed along a building line crown structures.

Preferably, along an end portion of the second building path, two axially approachable half-parts of the forming drum disengaged from a built tyre are mutually translated and positioned at a preset mutual distance.

This operation of setting the forming drum ensures that the half-parts of the drum, axially approached during the assembly of the crown structure with the carcass structure, are repositioned at a distance suitable for building the subsequent carcass structure. The building drum loaded on the conveyor in the exchange station will therefore already be ready for a new production cycle along the first building path.

Preferably, the auxiliary support elements comprise a first pair of axial extension members of the forming drum.

A conveyor is also preferably provided for moving said forming drums along the first building path.

More particularly, a conveyor can be provided for separately moving each forming drum along the first building path.

Preferably, said auxiliary support elements are engaged to the conveyor.

Axial movement members are preferably provided for coupling and decoupling the auxiliary support elements from the forming drum.

Preferably, said axial movement members are carried by a conveyor conceived for moving said forming drums along the first building path.

Preferably, the auxiliary support elements are permanently constrained to the conveyor.

More particularly, the auxiliary support elements are permanently constrained to the conveyor by means of said axial movement members.

There follows a structural simplification of the system, since the same axial movement members also accomplish the function of permanent constraint between auxiliary support elements and the conveyor.

In a possible modified embodiment, said axial movement members are unconstrained from the conveyor.

For example, said axial movement members are installed in the exchange station.

Said axial movement members are preferably installed along an end portion of the first building path extending from the exchange station to a first work station closest thereto.

Additional auxiliary support elements can also be provided, operatively couplable to the forming drum along the first building path.

Preferably said auxiliary support elements and said additional auxiliary support elements have respectively different diameters.

Preferably, the additional auxiliary support elements can be used selectively and alternatively with respect to said auxiliary support elements.

Preferably, the additional auxiliary support elements are permanently constrained to a conveyor conceived for moving said forming drums along the first building path.

Preferably, said forming drums comprise first and second forming drums having respectively different diameters.

In such a manner, it is thus possible to simultaneously build tyres that are geometrically and/or structurally different from each other.

Preferably, the auxiliary support elements and the additional auxiliary support elements have respectively different diameters, corresponding to those of the first forming drums and, respectively, of the second forming drums.

Preferably, the first building path has an open linear configuration depending on the exchange station.

A structural simplification and/or a containment of the bulk of the machinery and equipment installed in the first building path is thus obtained.

Preferably, the second building path has a closed circuital configuration, having an initial portion and an end portion depending on the exchange station.

It is thus possible to limit the transfer times of the drums to and from the second building path.

First work stations operating along the first building path can be provided for depositing first carcass structure components on each forming drum.

Preferably, at least one of said first work stations is configured for depositing a semifinished product in strip form delivered in a circumferential sense on the forming drum.

Devices for driving in rotation each forming drum on the first building path can also be provided.

Preferably, said rotation driving devices are installed on a conveyor conceived for moving said forming drums along the first building path.

The same driving devices can therefore be used for determining the rotation of the forming drum in each of the first work stations.

Preferably, the auxiliary support elements coupled to the forming drum support axially opposite flaps of said first carcass structure components.

Second work stations can be provided, operating along the second building path for depositing second carcass structure components on each forming drum. Preferably, said second work stations include a bead seater unit comprising devices for applying reinforcement annular structures to the first carcass structure components.

In a preferred embodiment, said second work stations include a bead seater unit, proximal to the exchange station, comprising devices for applying reinforcement annular structures to the first carcass structure components.

Preferably, the transfer device removes the forming drum from the aforementioned bead seater unit.

Preferably, said second work stations include an assembly unit comprising devices for arranging a crown structure around the forming drum.

Preferably, the assembly unit further comprises devices for removing a built tyre from the forming drum.

In a possible embodiment solution, one of said second work stations, comprises devices for removing a built tyre from the forming drum.

A building line for crown structures is also preferably provided, depending on said assembly unit.

A setting unit can be provided, operatively interposed between the exchange station and one of said second work stations which comprises devices for removing a built tyre from the forming drum.

Preferably, each forming drum comprises two axially approachable half-parts.

In a preferred embodiment, each forming drum comprises two axially approachable half-parts, said setting unit comprising devices for axially moving said axially approachable half-parts.

Preferably, the transfer device comprises an industrial robot.

Transfer devices are also preferably provided for moving the forming drums along the second building path.

Preferably, said transfer devices comprise robotized arms, each operating between two of said respectively contiguous second work stations.

Further characteristics and advantages will be clearer from the detailed description of a preferred but not exclusive embodiment of a method and a plant for building tyres for vehicle wheels, in accordance with the present invention.

Such description will be set forth hereinbelow with reference to the set of drawings, provided as a mere non-limiting example, in which:
- figure 1 shows a schematic lay-out of a plant for building tyres obtained according to the present invention;
- figure 2 shows a schematic lay-out of a plant according to the invention, in accordance with a possible modified embodiment;
- figure 3 shows, in cross section, a tyre obtainable according to the present invention.

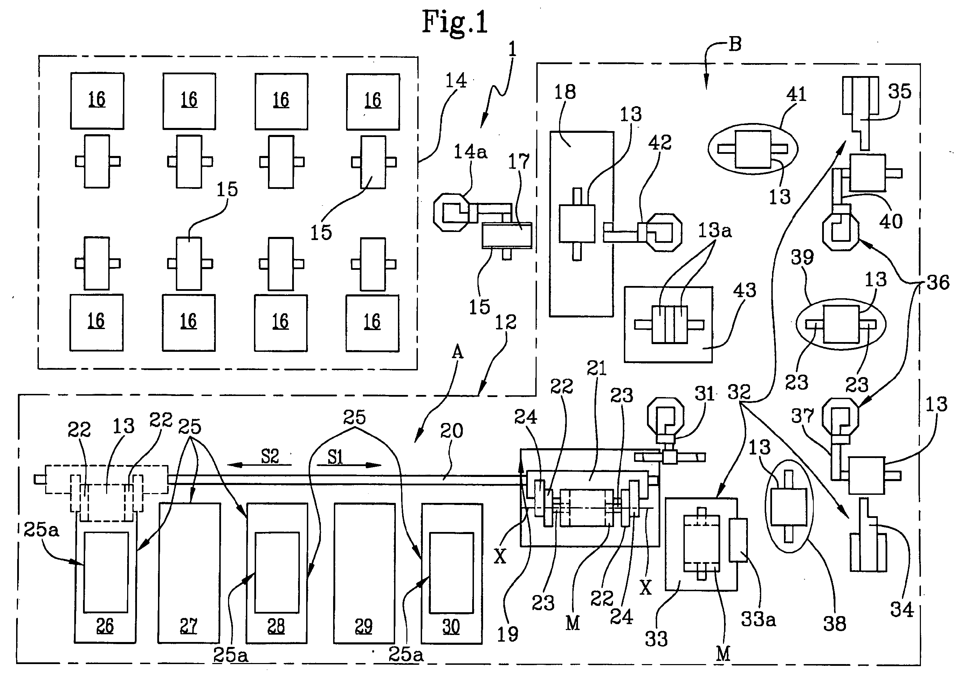

With particular reference to figure 1, a plant for building tyres of vehicle wheels, in accordance with the present invention, has been indicated in its entirety with the reference number 1.

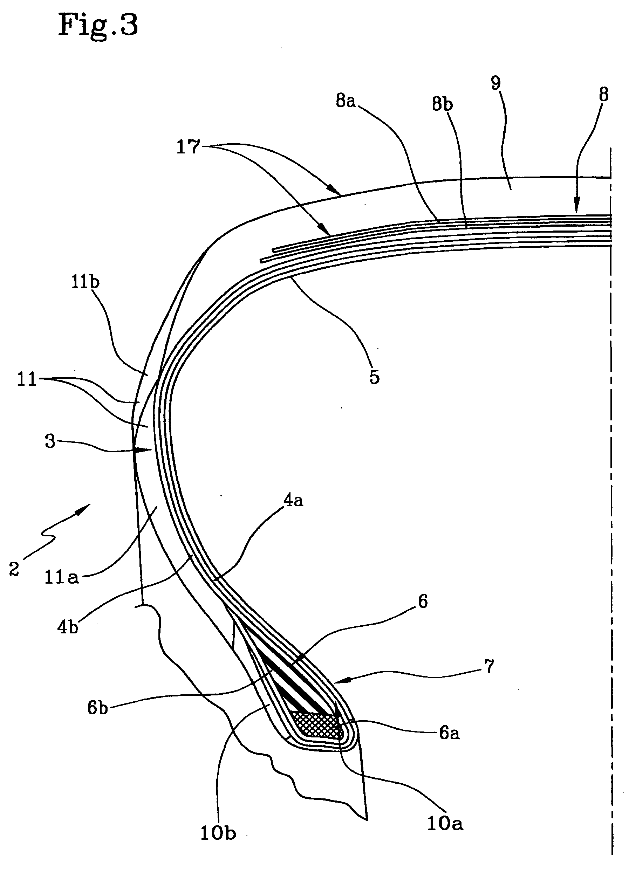

A tyre 2, obtainable by means of the plant 1 and the method in accordance with the present invention, is exemplified in figure 3 and essentially comprises a carcass structure 3 having two carcass plies 4a, 4b. One layer of impermeable elastomeric material or so-called liner 5 is applied inside the carcass ply/plies 4a, 4b.

Two reinforcement annular structures 6, each comprising a so-called bead core 6a carrying an elastomeric filler 6b in radially outer position, are engaged with respective terminal flaps of the carcass ply/plies 4a, 4b. The reinforcement annular structures 6 are integrated in proximity of areas normally identified with the name "beads" 7, at which the engagement between the tyre 2 and a respective mounting rim usually occurs.

A belt structure 8 comprising multiple belt layers 8a, 8b is circumferentially applied around the carcass plies 4a, 4b, and a tread band 9 is circumferentially superimposed on the belt structure 8.

So-called "antiabrasive inserts", each for example having a radially inner portion 10a and a radially outer portion 10b, can cover the bead 7. A sidewall is extended from each bead 7, at a corresponding lateral edge of the tread band 9; such sidewall is possibly composed of a radially inner portion 11a and a radially outer portion 11b, and is applied in axially outer position on the carcass plies 4a, 4b.

In proximity of the sidewalls 11, reinforcement inserts can also be integrated, normally termed "sidewall inserts" (not illustrated) situated in axially inner or axially outer position with respect to the carcass ply or plies 4a, 4b, in order to confer self-bearing properties to the tyre.

The plant 1 comprises a carcass building line 12, at which forming drums 13 are moved between different work stations conceived to form, on each forming drum 13, the carcass structure 3 comprising the carcass ply or plies 4a, 4b, and other components as better described hereinbelow.

Simultaneously, in a building line for crown structures 14, one or more auxiliary drums 15 are sequentially moved between different delivery stations 16 arranged to form, on each auxiliary drum 15, a crown structure 17, comprising at least the belt structure 8. Preferably, the crown structure 17 further comprises the tread band 9 and, possibly, at least the radially outer portion 11b of the sidewalls 11, by "radially outer" it being intended the sidewall portion closest to the tread band 9 in the built tyre 2.

A handling device 14a associated with the building line for crown structures 14, provides to transfer, to an assembly unit 18, each auxiliary drum 15 with the crown structure formed thereon. The assembly unit 18, only schematically indicated and preferably integrated along the carcass building line 12, comprises devices for arranging each crown structure 17, upon removal of the same from the respective auxiliary drum 15, around a respective forming drum 13 bearing the carcass structure 3 built thereon. More particularly, in the assembly unit 18, the carcass structure 3 is shaped according to a toroidal configuration, so as to be coupled to the crown structure 17, following a mutual moving closer of axially approachable half-parts 13a of the forming drum 13, actuated preferably by suitable devices installed in the assembly unit 18 itself.

The assembly unit 18 further comprises devices for removing the built tyre 2 from the forming drum 13, so that it is transferred to at least one moulding and vulcanization unit, not illustrated.

Along the carcass building line 12, a first building path "A" and a second building path "B" are defined, between which an exchange station 19 is interposed.

The first building path "A", having preferably an open linear configuration depending on the exchange station 19, can comprise a preferably rectilinear guide 20 on which a conveyor 21 is mounted capable of supporting one forming drum 13 at a time. The conveyor 21, moved by a suitable non-illustrated motor, is capable of being moved along the guide 20 and in both travel senses "S1", "S2".

On the conveyor 21, at least one pair of auxiliary support elements 22 is mounted, operatively couplable and decouplable with respect to the forming drum 13 carried by the conveyor 21.

More particularly the auxiliary support elements 22, for example obtainable in the form of axial extension members of the forming drum 13, are preferably coaxially approachable to the forming drum 13, in a relation of substantial continuity with an external cylindrical surface of the drum itself. For example, the auxiliary support elements 22 can be fit on connection shanks 23 projecting coaxially from the respectively opposite sides of the forming drum 13.

Axial movement members 24, preferably mounted on the conveyor 21, are adapted to couple and decouple the auxiliary support elements 22 to/from the forming drum 13. Preferably, the auxiliary support elements 22 are constrained to the conveyor 21 in a permanent manner, i.e. that the auxiliary support elements 22 are never removed from the conveyor 21 during the course of multiple work cycles completed along the first building path "A". This function of permanent constraint can be entrusted to the axial movement members 24 themselves, mounted on the conveyor 21.

Also associated with the conveyor 21 are devices for driving in rotation each forming drum 13 carried by the conveyor 21 itself. Such drive devices can comprise a motor, not illustrated, for example integrated in the axial movement members 24 for rotating the forming drum 13 around a rotation axis "X-X" coinciding with the longitudinal axis of symmetry of the drum itself and with the rotation axis of the tyre 2 that is about to be formed.

Along the first building path "A", preferably on a single side of the guide 20, first work stations 25 are arranged consecutively, one after the other, in order to deposit first carcass structure components on the forming drum 13 moved along the first building path "A".

The number "n" of the first work stations 25 can be for example comprised between four and ten.

Based on the manufacturing instructions of the tyre 2 to be built, in some or in all "n" first work stations 25 ("n" is equal to five in the illustrated embodiment) "m" delivery groups 25a are installed ("m" is equal to three in the illustrated embodiment). More generally, preferably, the number "m" of first work stations 25 occupied by a delivery group 25a is preferably comprised between three and ten.

The first carcass structure components comprise one or more components selected from among the following: liner, under-liner, radially inner portions of antiabrasive inserts, complete antiabrasive inserts, complex-liner (intended as a single semifinished product comprising liner, under-liner and antiabrasive inserts or portions thereof), first carcass ply, chafer (i.e. reinforcements generally armed with cords associated with the beads), second carcass ply, sidewall inserts.

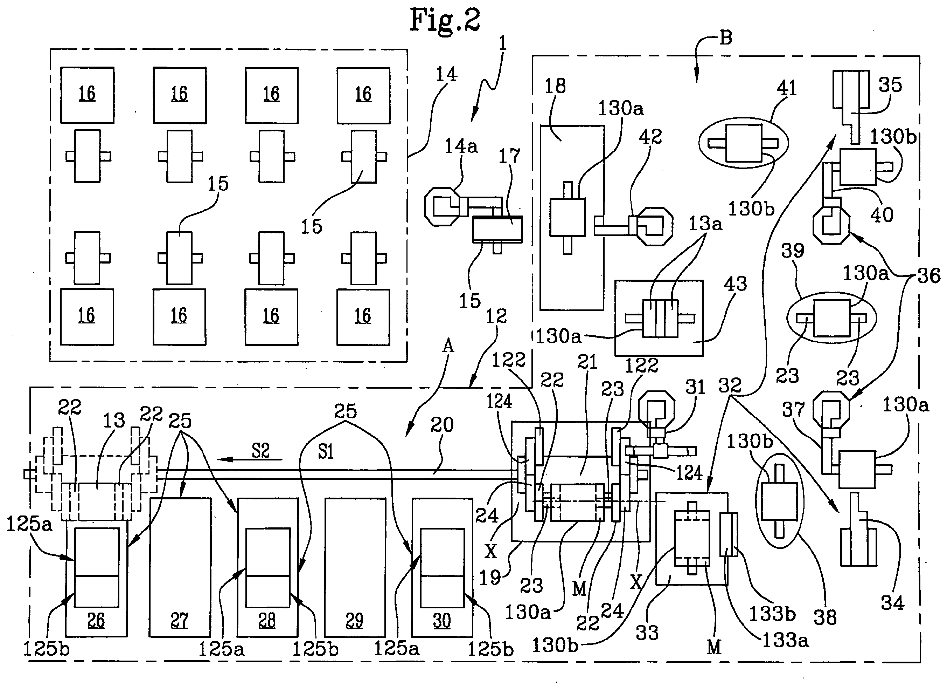

According to that illustrated in the enclosed figure 1, the following can be identified among the first work stations 25: a liner deposition unit 26, for example arranged to deposit a liner 5 or complex-liner on the forming drum 13, a first auxiliary deposition unit 27 usable if needed, for example, for depositing sidewall reinforcements, a first ply deposition unit 28 usable for forming the first carcass ply 4a, a second auxiliary deposition unit 29, usable if needed, for example, for depositing chafers, and a second ply deposition unit 30 for forming the second carcass ply 4b. The plant illustrated in figure 1 is therefore set for building the tyre 2 illustrated in figure 2.

A non-illustrated control unit, operatively connected to sensors and to motors of the plant 1, is programmed in a manner such that the first work stations 25 deposit the respective semifinished products in a pre-established sequence on each forming drum 13.

The conveyor 21, being moved along the guide 20, is capable of bringing the forming drum 13 to each of the first work stations 25 and to stop it in a position suitable for receiving the required semifinished product.

By "semifinished product" it is intended a manufactured item in the shape of a ring coaxially applicable on the forming drum 13, or in the form of a continuous strip to be wound according to a complete revolution around the circumferential extension of the forming drum 13 and joinable head-head with the respective opposite ends, upon cutting to size.

With reference to the embodiment of figure 1, the conveyor 21 carries the respective empty forming drum 13, coupled to the respective auxiliary support elements 22, to the liner deposition unit 26. In such unit, the respective delivery group 25a delivers the liner 5 (or the complex-liner) towards the forming drum 13, while the latter rotates around its geometric axis "X-X". The liner 5 is therefore wound around the entire circumferential extension of the forming drum 13. At the end of the winding, axially opposite terminal flaps of the liner 5 are superimposed on the auxiliary support elements 22.

Once the winding is completed, the forming drum 13 is brought to the first ply deposition unit 28, skipping the first auxiliary deposition unit 27, in order to receive the first carcass ply 4a; then it is brought to the second ply deposition unit 30 in order to receive the second carcass ply 4b, in a manner analogous to that completed for the liner 5, forming a carcass sleeve "M".

A plurality of forming drums 13 simultaneously circulates along the second building path B; the presence of a single forming drum 13 being processed along the first building path "A" allows easily adapting the plant to the production of tyres, each time different from a structural as well as size standpoint, to the benefit of production flexibility.

More particularly, in order to change the type or model of tyre 2 which is built, in the first building path "A" it is indeed possible: to remove and/or add and/or replace one or more delivery groups 25a of semifinished products and/or change the position thereof in the first work stations 25, and/or replace the semifinished products carried by them.

It is also possible to change the sequence according to which the conveyor 21 carries the forming drum 13 to the single first work stations 25. In other words, the forming drum 13 moved along the first building path "A" encounters the first work stations 25 according to a sequence programmable and modifiable at each work cycle.

In particular, the forming drum 13 can reach the first. work stations 25 according to a sequence different from the spatial succession of the same first work stations along the first building path "A". It is for example possible, by suitably installing the delivery groups 25a, that the forming drum 13 is carried into the first auxiliary deposition unit 27, and subsequently into the first ply deposition unit, in order to obtain for example the application of sidewall inserts arranged, in the built tyre 2, in axially inner position with regard to the first carcass ply 4a.

Once the processing along the first building path "A" is completed, the conveyor 21 carries the forming drum 13 into the exchange station 19.

At the exchange station 19, a transfer device 31 operates, comprising for example an industrial robot preferably in the form of an anthropomorphic arm. The transfer device 31 is adapted to pick up the forming drum 13a from the conveyor 21, in order to transfer it to the second building path "B".

The forming drum 13 which has completed the processing on the first building path "A" is decoupled from the auxiliary support elements 22 before being removed from the conveyor 21 and transferred to the second building path "B". The decoupling of the auxiliary support elements 22 can be at least partly actuated due to the action of the axial movement members 24 during translation of the forming drum 13 towards the exchange station 19 and, preferably, completed or substantially completed when the forming drum 13 reaches the exchange station 19. For such purpose, during the translation towards the exchange station 19, the axial movement members 24 axially remove the auxiliary support elements 22 from the respective connection shanks 23 and from the axially opposite terminal flaps of the carcass sleeve "M" formed on the forming drum 13. When the conveyor 21 reaches the exchange station 19, the forming drum 13 is already ready to be picked up from the transfer device 31 at the connection shanks 23 disengaged from the auxiliary support elements 22, which remain engaged with the conveyor 21. Nevertheless, it may be provided that the disengagement of the auxiliary support members 22 from the respective connection shanks 23 is not completed until the transfer device 31 has engaged the forming drum 13.

In one possible modified embodiment, not illustrated, the axial movement members 24 are unconstrained from the conveyor 21, for example installed in the exchange station 19, or along an end portion of the first building path "A" extending between the exchange station 19 and the first work station (in the illustrated embodiment, that integrating the second ply deposition unit 30) closest thereto.

The second building path "B" is preferably extended according to a closed circuital configuration, having an initial portion and an end portion depending on the exchange station 19.

Along the second building path "B", a plurality of second work stations 32 operates for depositing second carcass structure components on each forming drum 13.

The second carcass structure components applied along the second building path "B" comprise at least one component selected from among: reinforcement annular structures, radially outer portions of antiabrasive inserts, complete antiabrasive inserts, radially inner sidewall portions (in the built tyre), complete sidewalls.

In the illustrated embodiment, the following can be identified among the second work stations 32: a bead seater unit 33, comprising devices for applying reinforcement annular structures 6 to the first carcass structure components, i.e. to the carcass sleeve "M" obtained by these, a possible antiabrasive application unit 34, arranged to form at least radially outer portions of antiabrasive inserts 10b in proximity of the beads 7, a sidewall application unit 35 arranged for forming, on the carcass plies 4a, 4b, at least the radially inner portions 11a of the sidewalls 11, being extended from the beads 7.

The forming drum 13 picked up from the conveyor 21 in the exchange station 19 is loaded in the bead seater unit 33 by the transfer device 31. The reinforcement annular structures 6, preferably obtained in the form of annular semifinished products arranged on a feeder 33a under the control of the bead seater unit 33, are fit around the terminal flaps of the carcass sleeve "M" axially projecting from the forming drum 13. Turning-up devices associated with the same bead seater unit 33 turn up the terminal flaps of the carcass sleeve "M" around the reinforcement annular structures 6.

The forming drum 13 is subsequently removed from the bead seater unit 33, for example by the transfer device 31, in order to be provided to transfer devices 36 capable of moving the forming drums along the second building path "B".

After having removed the forming drum 13 from the bead seater unit 33, the transfer device 31 picks up a new forming drum 13 from the conveyor 21 and transfers it into the bead seater unit itself, such new forming drum 13 having just completed the processing cycle along the first building path "A".

The transfer devices 36 associated with the second building path "B" can for example comprise robotized arms, each operating between two of said respectively contiguous second work stations 32.

A first robotized arm 37 takes the forming drum 13 released by the transfer device 31, for example, in a first waiting station 38, in order to bring it before the antiabrasive application unit 34, comprising for example a first extruder or another device capable of delivering a first elementary component, preferably in continuous elongated element form. The first robotized arm 37 supports the forming drum 13 in proximity of one of the connection shanks 23, in order to drive it in rotation and suitably move it before the antiabrasive application unit 34, so as to form the radially inner portion 10a of each antiabrasive insert following the deposition of the first elementary component according to a plurality of coils that are mutually approached and/or superimposed.

The forming drum 13, possibly released on a second waiting station 39 by the first robotized arm 37, is subsequently picked up by a second robotized arm 40 under the control of the sidewall application unit 35, comprising for example a second extruder or another device capable of delivering a second elementary component preferably in the form of a continuous elongated element. The second robotized arm 40 supports the forming drum 13 in proximity of one of the connection shanks 23, in order to drive in rotation and suitably move it before the sidewall application unit 35 so as to form each sidewall 11, or the radially inner portion 11a thereof, following the deposition of the second elementary component according to a plurality of coils that are mutually approached and/or superimposed.

The carcass structure 3 is thus completed on the forming drum 13.

The forming drum 13, possibly released on a third waiting station 41 by the second robotized arm 40, is subsequently picked up by a third robotized arm 42, which loads it in the assembly unit 18 where the coupling is executed of the carcass structure 3 to the crown structure 17 in order to form the built tyre 2.

After the built tyre 2 has been removed from the forming drum 13, the same empty forming drum is picked up from the assembly unit 18, for example due to the action of the third robotized arm 42, in order to be transferred into a setting unit 43 arranged in an end portion of the second building path "B", comprised between the exchange station 19 and the assembly unit 18.

In the setting unit 43, the axially approachable half-parts 13a of the forming drum 13, mutually approached during the coupling operation actuated in the assembly unit 18, are translated and positioned at a preset mutual distance, determined as a function of the geometric characteristics of the next tyre 2 to be obtained on the drum itself.

Upon completion of the setting, the empty forming drum 13 which has completed the processing on the second building path "B", is picked up by the setting unit 43.

Preferably, it is for such purpose provided that the transfer device 31 transfers the empty forming drum 13 into the exchange station 19, engaging it on the conveyor 21 from which the same transfer device 31 has previously removed a forming drum 13 carrying a carcass sleeve "M" coming from the first building path "A".

Subsequently to the transfer to the exchange station 19, the empty forming drum 13 released on the conveyor 21 is coupled to the same auxiliary support elements 22 previously decoupled from the forming drum 13 carrying the carcass sleeve "M", in order to start a new work cycle.

The coupling of the auxiliary support elements 22 to the empty forming drum 13 is actuated by the axial movement members 24 mounted on the conveyor 21, simultaneously with the translation of the latter moving away from the exchange station 19.

The coupling can therefore be completed before the empty forming drum 13 reaches the liner application unit 5, or another first work station 25 in which the presence of the auxiliary support elements 22 is required.

In this manner, it is avoided that the coupling operation causes undesired dead times.

In the above-described embodiment; the empty forming drum 13 transferred on the conveyor 21 is coupled to the same auxiliary support elements 22 decoupled from the forming drum 13 carrying the carcass sleeve "M", which has completed the processing on the first building path "A". This embodiment solution is particularly adapted to obtaining tyres having a same fitting diameter, but which can still be different from each other in relation to other geometric and structural characteristics, such as the width and/or section ratio, which can be modulated by selecting the mutual distance between the axially approachable half-parts 13a and arranging semifinished products with suitable width in the first work stations 25. In addition or as an alternative to that stated above, the tyres obtainable in the above-described embodiment can be different from each other in the structural composition, predetermining for example the use of one or more carcass plies, the presence or lack of presence of sidewall inserts, chafers or other additional components, as well as the structural specifications of the single components.

In a possible modified embodiment, it is also possible to differentiate the tyres obtained in relation to their fitting diameter.

Such modified embodiment is represented in figure 2; the same reference numbers used in figure 1 are used here, limited to corresponding parts.

With reference to figure 2, along the carcass building line 12 at least two types of forming drum are moved, for example first and second forming drums 130a, 130b having respectively different diameters, inserted according to a preset or random sequence.

The bead seater unit 33 is preferably equipped with a double feeder 133a, 133b capable of selectively serving reinforcement annular structures 6 with different diameters, adapted respectively for the first and second drum. Analogously, one or more of the first work stations 25 can if needed be each equipped with a double delivery group 125a, 125b carrying semifinished products respectively suitable for the first and the second forming drum 130a, 130b.

Additional auxiliary support elements 122 are also associated with the conveyor 21 coupled with the auxiliary support elements 22. The auxiliary support elements 22 and the additional auxiliary support elements 122 have different diameters from each other, respectively corresponding to those of the first forming drums 130a and the second forming drums 130b.

The additional auxiliary support elements 122, permanently engaged with the conveyor 21 by means of respective additional axial movement members 124, are adapted to be selectively and alternatively used with respect to said auxiliary support elements 22, depending on whether one of the first forming drums 130a or one of the second forming drums 130b is situated on the conveyor 21.

More particularly, when the exchange station 19 is reached by one of the second forming drums 130 picked up by the setting unit 43 after the transfer device 31 has picked up one of the first forming drums 130a from the conveyor 21, the additional auxiliary support elements 122, previously inactive, replace the auxiliary support elements 22 previously decoupled from the first forming drum 130a which has completed the processing on the first building path "A", in order to be coupled to the second forming drum 130b, after the latter has been brought on the conveyor 21. The replacement can be obtained, for example, following a rotation of 180° of the conveyor 21 around a vertical axis.

In order to facilitate a correct matching, each of the first and second forming drums 130a, 130b can be associated with suitable identification codes, identifiable by reading devices associated with one or more of the first and second work stations 25, 32.

## Claims

1. A method for building tyres for vehicle wheels, wherein:
a forming drum (13) coupled to a pair of auxiliary support elements (22) is moved along a first building path ("A");
at least one forming drum (13) decoupled from said auxiliary support elements (22) is moved along a second building path ("B");
in an exchange station (19) interposed between the first and the second building path ("B"), the forming drum (13) which has completed the processing on the first building path ("A") is transferred to the second building path ("B") in absence of said pair of auxiliary support elements (22), and the forming drum (13) which has completed the processing on the second building path ("B") is transferred to the exchange station (19);
subsequently to the transfer to the exchange station (19), the forming drum (13) transferred to said exchange station (19) is coupled to the same pair of auxiliary support elements (22).

2. A method according to claim 1, wherein a single forming drum (13) is moved along the first building path ("A") at a time.

3. A method according to one or more of the preceding claims, wherein at least two forming drums (13) are moved along the second building path ("B").

4. A method according to one or more of the preceding claims, wherein a decoupling of the auxiliary support elements (22) from the respective forming drum (13) is at least partly actuated simultaneously with a translation of the forming drum (13) towards the exchange station (19).

5. A method according to one or more of the preceding claims, wherein a coupling of the auxiliary support elements (22) to the respective forming drum (13) is at least partly actuated simultaneously with a translation of the forming drum (13) moving away from the exchange station (19).

6. A method according to one or more of the preceding claims, wherein the auxiliary support elements (22) are decoupled from the forming drum (13) due to the action of axial movement members (24) installed in proximity of the exchange station (19), both auxiliary support elements (22) decoupled from the forming drum (13) remaining engaged to a conveyor (21) by means of which the forming drum (13) is moved along a first building path ("A").

7. A method according to one or more of the preceding claims, wherein the forming drum (13) moved along the first building path ("A") reaches first work stations (25) according to a sequence programmable and modifiable at each work cycle.

8. A method according to one or more of the preceding claims, wherein the forming drum (13) transferred to the exchange station (19) is coupled to additional auxiliary support elements (122).

9. A plant for building tyres for vehicle wheels, comprising:
forming drums (13);
a first building path ("A");
a second building path ("B");
an exchange station (19) interposed between the first building path ("A") and the second building path ("B");
a pair of auxiliary support elements (22) operatively couplable to the aforementioned forming drums (13);
a transfer device (31) operating in the exchange station (19), for transferring each forming drum (13) decoupled from the auxiliary support elements (22) from the exchange station (19) to the second building path ("B"), and vice versa.

10. A plant according to claim 9, further comprising a conveyor (21) for moving said forming drums (13) along the first building path ("A"), wherein said auxiliary support elements (22) are engaged to the conveyor (21).

11. A plant according to claim 9 or 10, further comprising additional auxiliary support elements (122) operatively couplable to the forming drum (13) along the first building path ("A"), wherein said auxiliary support elements (22) and said additional auxiliary support elements (122) have respectively different diameters.

12. A plant according to claim 11, wherein said forming drums comprise first and second forming drums (130a, 130b) having respectively different diameters, the auxiliary support elements (22) and the additional auxiliary support elements (122) having respectively different diameters, corresponding to those of the first forming drums (130a) and, respectively, of the second forming drums (130b).

13. A plant according to one or more of claims 9 to 12, wherein the first building path ("A") has an open linear configuration depending on the exchange station (19).

14. A plant according to one or more of claims 9 to 13, wherein the second building path ("B") has a closed circuital configuration, having an initial portion and an end portion depending on the exchange station (19).

15. A plant according to one or more of claims 9 to 14, further comprising a setting unit (43) operatively interposed between the exchange station (19) and one of said second work stations (32) which comprises devices for removing a built tyre (2) from the forming drum (13).

## Patentansprüche

1. Verfahren zur Herstellung von Reifen für Fahrzeugräder, wobei
eine Formungstrommel (13), die mit einem Paar von Zusatzträgerelementen (22) gekoppelt ist, entlang eines ersten Fertigungspfads ("A") bewegt wird;
zumindest eine Formungstrommel (13), die von den Zusatzträgerelementen (22) entkoppelt ist, entlang eines zweiten Fertigungspfads ("B") bewegt wird;
in einer Austauschstation (19), die zwischen dem ersten und dem zweiten Fertigungspfad ("B") angeordnet ist, die Formungstrommel (13), die die Bearbeitung an dem ersten Fertigungspfad ("A") abgeschlossen hat, ohne das Paar von Zusatzträgerelementen (22) auf den zweiten Fertigungspfad ("B") übertragen wird, und die Formungstrommel (13), die die Bearbeitung an dem zweiten Fertigungspfad ("B") abgeschlossen hat, an die Austauschstation (19) übertragen wird;
auf die Übertragung an die Austauschstation (19) folgend die Formungstrommel (13), die an die Austauschstation (19) übertragen wurde, mit demselben Paar von Zusatzträgerelementen (22) gekoppelt wird.

2. Verfahren nach Anspruch 1, wobei zu jeder Zeit eine einzelne Formungstrommel (13) entlang des ersten Fertigungspfads ("A") bewegt wird.

3. Verfahren nach einem oder mehreren der vorhergehenden Ansprüche, wobei zumindest zwei Formungstrommeln (13) entlang des zweiten Fertigungspfads ("B") bewegt werden.

4. Verfahren nach einem oder mehreren der vorhergehenden Ansprüche, wobei ein Entkoppeln der Zusatzträgerelemente (22) von der jeweiligen Formungstrommel (13) zumindest zum Teil gleichzeitig mit einer Übertragung der Formungstrommel (13) zu der Austauschstation (19) hin betätigt wird.

5. Verfahren nach einem oder mehreren der vorhergehenden Ansprüche, wobei ein Koppeln der Zusatzträgerelemente (22) mit der jeweiligen Formungstrommel (13) zumindest zum Teil gleichzeitig mit einer Übertragung der Formungstrommel (13) unter Bewegung von der Austauschstation (19) weg betätigt wird.

6. Verfahren nach einem oder mehreren der vorhergehenden Ansprüche, wobei die Zusatzträgerelemente (22) von der Formungstrommel (13) durch die Wirkung von axialen Bewegungselementen (24) entkoppelt werden, die in der Nähe der Austauschstation (19) installiert sind, wobei beide Zusatzträgerelemente (22), die von der Formungstrommel (13) entkoppelt sind, mit einer Fördereinrichtung (21) in Eingriff bleiben, durch welche die Formungstrommel (13) entlang eines ersten Fertigungspfads ("A") bewegt wird.

7. Verfahren nach einem oder mehreren der vorhergehenden Ansprüche, wobei the Formungstrommel (13), die entlang des ersten Fertigungspfads ("A") bewegt wird, erste Arbeitsstationen (25) entsprechend einer Sequenz erreicht, die programmierbar und mit jedem Arbeitszyklus modifizierbar ist.

8. Verfahren nach einem oder mehreren der vorhergehenden Ansprüche, wobei die Formungstrommel (13), die an die Austauschstation (19) übertragen wurde, mit weiteren Zusatzträgerelementen (122) gekoppelt wird.

9. Anlage zur Herstellung von Reifen für Fahrzeugräder, umfassend:
Formungstrommeln (13);
einen ersten Fertigungspfad ("A");
einen zweiten Fertigungspfad ("B");
eine Austauschstation (19), die zwischen dem ersten Fertigungspfad ("A") und dem zweiten Fertigungspfad ("B") angeordnet ist;
ein Paar von Zusatzträgerelementen (22), die operativ mit den erwähnten Formungstrommeln (13) gekoppelt sind;
eine Transfereinrichtung (31), die an der Austauschstation (19) arbeitet, um jede Formungstrommel (13), die von den Zusatzträgerelementen (22) entkoppelt ist, von der Austauschstation (19) an den zweiten Fertigungspfad ("B") zu übertragen und umgekehrt.

10. Anlage nach Anspruch 9, des Weiteren umfassend eine Fördereinrichtung (21) zur Bewegung der Formungstrommeln (13) entlang des ersten Fertigungspfads ("A"), wobei die Zusatzträgerelemente (22) mit der Fördereinrichtung (21) in Eingriff stehen.

11. Anlage nach Anspruch 9 oder 10, des Weiteren umfassend weitere Zusatzträgerelemente (122), die operativ mit der Formungstrommel (13) entlang des ersten Fertigungspfads ("A") gekoppelt werden können, wobei die Zusatzträgerelemente (22) und die weiteren Zusatzträgerelemente (122) jeweils unterschiedliche Durchmesser aufweisen.

12. Anlage nach Anspruch 11, wobei die Formungstrommeln erste und zweite Formungstrommeln (130a, 130b) mit jeweils unterschiedlichen Durchmessern umfassen, wobei die Zusatzträgerelemente (22) und die weiteren Zusatzträgerelemente (122) jeweils unterschiedliche Durchmesser aufweisen, die jenen der ersten Formungstrommeln (130a) bzw. jenen der zweiten Formungstrommeln (130b) entsprechen.

13. Anlage nach einem oder mehreren der Ansprüche 9 bis 12, wobei der erste Fertigungspfad ("A") eine offene lineare Konfiguration aufweist, die von der Austauschstation (19) abhängig ist.

14. Anlage nach einem oder mehreren der Ansprüche 9 bis 13, wobei der zweite Fertigungspfad ("B") eine geschlossene Kreiskonfiguration aufweist, die einen Anfangsabschnitt und einen Endabschnitt aufweisen, die jeweils von der Austauschstation (19) abhängig ist.

15. Anlage nach einem oder mehreren der Ansprüche 9 bis 14, des Weiteren umfassend eine Absetzeinheit (43), die operativ zwischen der Austauschstation (19) und einer der zweiten Arbeitsstationen (32) angeordnet ist und Vorrichtungen zur Entfernung eines hergestellten Reifens (2) von der Formungstrommel (13) umfasst.

## Revendications

1. Procédé de construction de pneus pour roues de véhicule, dans lequel :
un tambour de formation (13) couplé à une paire d'éléments de support auxiliaires (22) est déplacé le long d'un premier chemin de construction ("A") ;
au moins un tambour de formation (13) découplé desdits éléments de support auxiliaires (22) est déplacé le long d'un deuxième chemin de construction ("B") ;
dans une station d'échange (19) interposée entre le premier et le deuxième chemin de construction ("B"), le tambour de formation (13) qui a terminé le traitement sur le premier chemin de construction ("A") est transféré au deuxième chemin de construction ("B") en l'absence de ladite paire d'éléments de support auxiliaires (22), et le tambour de formation (13) qui a terminé le traitement sur le deuxième chemin de construction ("B") est transféré à la station d'échange (19) ;
suite au transfert à la station d'échange (19), le tambour de formation (13) transféré à ladite station d'échange (19) est couplé à la même paire d'éléments de support auxiliaires (22).

2. Procédé selon la revendication 1, dans lequel un seul tambour de formation (13) est déplacé le long du premier chemin de construction ("A") en une seule fois.

3. Procédé selon l'une ou plusieurs des revendications précédentes, dans lequel au moins deux tambours de formation (13) sont déplacés le long du deuxième chemin de construction ("B").

4. Procédé selon l'une ou plusieurs des revendications précédentes, dans lequel le découplage des éléments de support auxiliaires (22) du tambour de formation respectif (13) est au moins partiellement actionné simultanément avec une translation du tambour de formation (13) vers la station d'échange (19).

5. Procédé selon l'une ou plusieurs des revendications précédentes, dans lequel un couplage des éléments de support auxiliaires (22) au tambour de formation respectif (13) est au moins partiellement actionné simultanément avec une translation du tambour de formation (13) s'éloignant de la station d'échange (19).

6. Procédé selon l'une ou plusieurs des revendications précédentes, dans lequel les éléments de support auxiliaires (22) sont découplés du tambour de formation (13) en raison de l'action d'éléments de déplacement axial (24) installés à proximité de la station d'échange (19), les deux éléments de support auxiliaires (22) découplés du tambour de formation (13) restant engagés sur un transporteur (21) au moyen duquel le tambour de formation (13) est déplacé le long d'un premier chemin de construction ("A").

7. Procédé selon l'une ou plusieurs des revendications précédentes, dans lequel le tambour de formation (13) déplacé le long du premier chemin de construction ("A") atteint les premières stations de travail (25) selon une séquence programmable et modifiable à chaque cycle de travail.

8. Procédé selon l'une ou plusieurs des revendications précédentes, dans lequel le tambour de formation (13) transféré à la station d'échange (19) est couplé à des éléments de support auxiliaires supplémentaires (122).

9. Installation pour la construction de pneus pour roues de véhicule, comprenant :
des tambours de formation (13) ;
un premier chemin de construction ("A") ;
un deuxième chemin de construction ("B") ;
une station d'échange (19) interposée entre le premier chemin de construction ("A") et le deuxième chemin de construction ("B") ;
une paire d'éléments de support auxiliaires (22) pouvant être couplés de manière fonctionnelle aux tambours de formation (13) susmentionnés ;
un dispositif de transfert (31) fonctionnant dans la station d'échange (19), pour transférer chaque tambour de formation (13) découplé des éléments de support auxiliaires (22) depuis la station d'échange (19) au deuxième chemin de construction ("B") et vice versa.

10. Installation selon la revendication 9, comprenant en outre un transporteur (21) pour déplacer lesdits tambours de formation (13) le long du premier chemin de construction ("A"), où lesdits éléments de support auxiliaires (22) sont engagés sur le transporteur (21).

11. Installation selon la revendication 9 ou 10, comprenant en outre des éléments de support auxiliaires supplémentaires (122) pouvant être couplés de manière fonctionnelle au tambour de formation (13) le long du premier chemin de construction ("A"), où lesdits éléments de support auxiliaires (22) et lesdits éléments de support auxiliaires supplémentaires (122) ont des diamètres respectivement différents.

12. Installation selon la revendication 11, dans laquelle lesdits tambours de formation comprennent des premiers et deuxièmes tambours de formation (130a, 130b) ayant des diamètres respectivement différents, les éléments de support auxiliaires (22) et les éléments de support auxiliaires supplémentaires (122) ayant des diamètres respectivement différents, correspondant à ceux des premiers tambours de formation (130a) et, respectivement, des deuxièmes tambours de formation (130b).

13. Installation selon l'une ou plusieurs des revendications 9 à 12, dans laquelle le premier chemin de construction ("A") a une configuration linéaire ouverte en fonction de la station d'échange (19).

14. Installation selon l'une ou plusieurs des revendications 9 à 13, dans laquelle le deuxième chemin de construction ("B") a une configuration de circuit fermé, ayant une partie initiale et une partie terminale en fonction de la station d'échange (19).

15. Installation selon l'une ou plusieurs des revendications 9 à 14, comprenant en outre une unité de pose (43) interposée de manière fonctionnelle entre la station d'échange (19) et l'une desdites deuxièmes stations de travail (32) qui comprend des dispositifs pour enlever un pneu construit (2) du tambour de formation (13).
